# EUROPÄISCHE PATENTSCHRIFT

(11) **EP 3 894 272 B1**
(45) Veröffentlichungstag und Bekanntmachung des Hinweises auf die Patenterteilung: **26.10.2022**
(21) Anmeldenummer: 19831994.9
(22) Anmeldetag: 11.12.2019
(51) Int. Cl.: B60N 2/70, B60R 21/207

(54) **FAHRZEUGSITZ**
VEHICLE SEAT
SIÈGE DE VÉHICULE

(30) Priorität: 11.12.2018 DE 102018131810; 20.12.2018 DE 102018133243
(43) Veröffentlichungstag der Anmeldung: 20.10.2021
(73) Patentinhaber: Adient US LLC, Plymouth, MI 48170 (US)
(72) Erfinder: HAMM, Jean-Luc, 67720 Hoerdt (FR); JOERKE, Benjamin, 85051 Zuchering (DE); GUENTHER, Benjamin, 42699 Solingen (DE)
(74) Vertreter: Liedhegener, Ralf
(86) Internationale Anmeldenummer: PCT/EP2019/084546
(87) Internationale Veröffentlichungsnummer: WO 2020/120526

(56) Entgegenhaltungen:
- EP-A2- 0 990 566
- US-A1- 2006 066 078
- US-A1- 2014 070 595
- US-A1- 2018 015 899

## Beschreibung

Die Erfindung betrifft einen Fahrzeugsitz mit einem Sitzteil und einer Rückenlehne, die Rückenlehne aufweisend ein Schaumteil mit einem Hohlraum zur wenigstens teilweisen Aufnahme einer Airbagvorrichtung.

### Stand der Technik

Die EP 1 199 227 A1 offenbart einen Fahrzeugsitz mit einer Baugruppe bestehend aus einer Rückenlehne und einem Gassack-Modul, wobei die Rückenlehne einen Rahmen, eine Polsterung und ein Verkleidungsteil aufweist, und wobei das Gassack-Modul einen Schusskanal aufweist, der an dem Rahmen angebracht ist. Das Verkleidungsteil ist starr ausgebildet, während die Polsterung im Bereich des Übergangs zum Verkleidungsteil derart nachgiebig ausgebildet ist, dass durch Verformung der Polsterung ein Spalt zwischen dem Verkleidungsteil und der Polsterung zum Austreten des Gassackes aus der Rückenlehne gebildet werden kann.

Aus der EP 1 201 510 A1 ist eine Sicherheitsvorrichtung für Kraftfahrzeuge mit wenigstens einem in einen Fahrzeugsitz integrierbaren Gassackmodul bekannt, das eine vorgefertigte und als zusammenhängendes Ganzes handhabbare Moduleinheit umfasst, die zumindest einen aufblasbaren und insbesondere als Seitenairbag dienenden Gassack sowie einen Gasgenerator aufweist, wobei ein zumindest einen Teil einer Rückwand des Fahrzeugsitzes bildendes Strukturelement zudem als Modulabdeckung für die Moduleinheit ausgebildet ist. Das Strukturelement weist wenigstens einen durch den sich aufblasenden Gassack aufbrechbaren, aufreißbaren, aufklappbaren und/oder wegschwenkbaren Bereich auf, der mit einer Sollbruchstelle versehen ist.

Die EP 2 960 116 B1 offenbart eine Far-Side-Airbagvorrichtung mit einem Seitenairbag, der in einer Fahrzeugbreitenrichtung an einer fahrzeugmittigen Seite einer Rückenlehne an einem Seitenabschnitt vorgesehen ist, wobei der Seitenairbag einen hinteren Aufblasabschnitt aufweist, der sich aufbläst und entfaltet, wenn er mit Gas versorgt wird, und der zumindest hintere Teile der Brust und des Bauchs eines sitzenden Insassen zurückhält. Eine Far-Side-Airbagvorrichtung kann die sogenannten sekundären Bewegungen, also die Bewegungen nach dem ersten Airbag-Kontakt, der Fahrzeug-Insassen nach einem Unfall berücksichtigen und deren Folgen mildern.

Aus der DE 196 03 106 A1 ist ein Fahrzeug mit zwei nebeneinander angeordneten Einzelsitzen bekannt, die wenigstens an ihren voneinander abgewandten Seiten je einen Seitenairbag beinhalten, der in einer zugehörigen Seitenwange des oberen Sitzlehnenbereichs untergebracht ist, wobei sich die oberen Sitzlehnenbereiche mit ihren Seitenwangen im Wesentlichen seitlich über die unteren Sitzlehnenbereiche hinaus bis nahe der benachbarten Fahrzeugstruktur erstrecken.

Aus der US 2006/066078 A1 ist ein Schaumkörper eines Fahrzeugsitzes mit einem Airbagmodul bekannt, wobei der Schaumkörper in einem seitlichen Bereich des Fahrzeugsitzes eingebaut ist und einen Aufnahmefreiraum für ein Airbagmodul aufweist. Der Schaumkörper hat einen Schusskanal, welcher einen Airbag des Airbagmoduls beim Expandieren führt. Zur Verstärkung des Schusskanals und um eine Beschädigung im Kontaktbereich zwischen dem Airbag und dem Schaumstoff zu vermeiden, wird in dem Schusskanal eine Verstärkungslage eingeklebt, welche als ein Strickgewirkelement ausgebildet ist.

Aus der US 2014 / 070 595 A1 ist ein Fahrzeugsitz mit einem Polsterkissen bekannt, welches einen Sitzrahmen abdeckt und am Sitzrahmen angebracht ist. Der Fahrzeugsitz weist einen Sitzbezug auf, welcher das Polsterkissen abdeckt und einen Aufblasabschnitt aufweist, um durch eine Aufblaskraft eines Airbags aufgeblasen zu werden. Der Fahrzeugsitz weist ein Gurtband auf, das mit dem Sitzbezug derart verbunden ist, dass es die Aufblaskraft des Airbags auf den Aufblasabschnitt überträgt, wobei sich das Gurtband vom Sitzbezug weg erstreckt und wobei das Gurtband an seinem distalen Endabschnitt einen Befestigungsabschnitt aufweist.

Aus der EP 0 990 566 A2 ist eine Insassenschutzvorrichtung zur Befestigung in einem Fahrzeugsitz mit einem Aufnahmebehälter für einen Gassack bekannt, bei der als Befestigungsmittel für einen Sitzbezug ein Materialstreifen vorgesehen ist. Dieser Materialstreifen erstreckt sich von einer Aufreißnaht des Sitzbezuges zu einem Befestigungspunkt, an dem der Materialstreifen an einem Träger mittels einer Schraube festgeschraubt wird. Der Aufnahmebehälter befindet sich innerhalb eines Sitzkissens.

Aus der US 2018 / 015 899 A1 ist ein Fahrzeugsitz mit einem Seitenairbag bekannt, der Folgendes einschließt: ein Airbagmodul mit einem darin untergebrachten Airbagkissen; einen Sitzrückenlehnenrahmen, wobei das Airbagmodul an dem Sitzrückenlehnenrahmen befestigt ist; und ein Sitzrückenlehnenpad, das mit an gegenüberliegenden Seiten hervorstehenden Polstern ausgestattet ist. Das Polster weist einen Unterbringungsraum auf, um das Airbagmodul aufzunehmen. Das Sitzrückenlehnenpad weist ein Korpusteil und ein Führungsteil, um die Entfaltung des Airbagkissens zu führen, auf. Das Korpusteil und das Führungsteil sind hierbei aus Materialien hergestellt, die in Bezug aufeinander eine unterschiedliche Steifigkeit aufweisen.

### Aufgabe

Der Erfindung liegt die Aufgabe zu Grunde, einen Fahrzeugsitz der eingangs genannten Art zu verbessern, insbesondere eine Integration einer Far-Side Airbagvorrichtung zu ermöglichen. Insbesondere soll eine Führung eines Gassackes aus einem Schaumteil heraus verbessert werden. Insbesondere soll eine Sollrissstelle in einem Schaumteil verlässlich ein Heraustreten des Gassackes aus dem Schaumteil ermöglichen. Ein Schaumpartikelflug während der Entfaltung des Gassackes soll minimiert werden.

### Lösung

Diese Aufgabe wird erfindungsgemäß gelöst durch einen Fahrzeugsitz mit einem Sitzteil und einer Rückenlehne, die Rückenlehne aufweisend ein Schaumteil mit einem Hohlraum zur wenigstens teilweisen Aufnahme einer Airbagvorrichtung, wobei das Schaumteil im Bereich des Hohlraums wenigstens teilweise mit einer Verstärkungsschichtanordnung ausgekleidet ist, wobei im Falle eines sich entfaltenden Gassackes der Airbagvorrichtung, die Verstärkungsschichtanordnung den sich entfaltenden Gassack zu einer Sollrissstelle des Schaumteils führt, und die Verstärkungsschichtanordnung eine erste Verstärkungsschicht und eine zweite Verstärkungsschicht aufweist, wobei das Schaumteil einen ersten Flansch, einen zweiten Flansch und einen den ersten Flansch mit dem zweiten Flansch verbindenden Steg aufweist, die den Hohlraum begrenzen, und ein äußerer Endbereich der ersten Verstärkungsschicht und/oder ein äußerer Endbereich der zweiten Verstärkungsschicht in den Steg eingeschäumt sind/ist.

Dadurch, dass das Schaumteil im Bereich des Hohlraums wenigstens teilweise mit einer Verstärkungsschichtanordnung ausgekleidet ist, ist eine Integration einer Far-Side-Airbagvorrichtung in die Rückenlehne ermöglicht. Insbesondere ist eine Führung eines Gassackes aus dem Schaumteil heraus verbessert.

Vorteilhafte Ausgestaltungen, welche einzeln oder in Kombination miteinander eingesetzt werden können, sind Gegenstand der Unteransprüche.

Ein äußerer Endbereich der ersten Verstärkungsschicht und ein äußerer Endbereich der zweiten Verstärkungsschicht können eine Sollrissstelle des Schaumteils zwischen sich bilden oder aufnehmen. Dadurch wird der sich entfaltende Gassack auf die Sollrissstelle zu geführt, um ein ungewolltes Einreißen des Schaumteils in anderen Bereichen zu verhindern.

Die zwei Verstärkungsschichten können derart zueinander positioniert sein, dass sie eine Sollrissstelle in dem Schaumteil ausbilden und/oder auskleiden. Die Sollrissstelle kann als eine Kerbe in dem Schaumteil ausgebildet sein. Die Sollrissstelle kann als eine Materialschwächung in dem Schaumteil ausgebildet sein. Die Sollrissstelle kann als ein Einschnitt in dem Schaumteil ausgebildet sein.

Die zwei Verstärkungsschichten können abgewinkelt zueinander positioniert sein, und dadurch eine Sollrissstelle ausbilden. Vorzugsweise weist eine Verstärkungsschicht, die in Fahrtrichtung vor dem Gassack angeordnet ist, eine besonders hohe Festigkeit auf. Die Verstärkungsschichtanordnung bietet Schutz für das Schaumteil vor einem ungewollten Zerreißen sowie eine Führung für den Gassack.

Der Steg verläuft vorzugsweise überwiegend parallel zu einer durch eine Längsrichtung und eine Vertikalrichtung definierten Ebene.

In einem Bereich der Sollrissstelle des Schaumteils kann der äußere Endbereich der zweiten Verstärkungsschicht annähernd senkrecht zum äußeren Endbereich der ersten Verstärkungsschicht ausgerichtet sein.

In einem Bereich der Sollrissstelle des Schaumteils kann der äußere Endbereich der zweiten Verstärkungsschicht annähernd parallel zum äußeren Endbereich der ersten Verstärkungsschicht verlaufen.

Die beiden Verstärkungsschichten können einander abschnittsweise überlappen. Wenigstens eine der beiden Verstärkungsschichten kann ein Vlies sein. Wenigstens eine der Verstärkungsschichten kann eine Schutzlage sein. Wenigstens eine der Verstärkungsschichten kann aus einem Gewebe gefertigt sein. Wenigstens eine der Verstärkungsschichten kann aus einem Kunststoff gefertigt sein. Wenigstens eine der Verstärkungsschichten kann aus einem Textil gefertigt sein. Wenigstens eine der beiden Verstärkungsschichten kann aus einem Leder gefertigt sein.

Wenigstens eine der Verstärkungsschichten kann zweidimensional ausgebildet sein. Wenigstens eine der Verstärkungsschichten kann dreidimensional ausgebildet sein. Wenigstens einer der Verstärkungsschichten kann mit dem Schaumteil verklebt sein. Wenigstens einer der Verstärkungsschichten kann formschlüssig mit dem Schaumteil verbunden sein. Wenigstens einer der Verstärkungsschichten kann mittels Haftreibung mit dem Schaumteil verbunden sein. Wenigstens einer der Verstärkungsschichten kann mit dem Schaumteil hinterschäumt sein. Wenigstens einer der Verstärkungsschichten kann wenigstens abschnittsweise in das Schaumteil eingeschäumt sein.

Neben einer in einem dem Insassen abgewandten Bereich des Schaumteils (B-seitig) in das Schaumteil eingebrachten Sollrissgeometrie (Sollrissstelle, z.B. Schlitz) kann ein Vlies oder Verstärkungsmaterial zur Verstärkung und ein weiteres, abgewinkeltes Vlies oder Verstärkungsmaterial entlang der Sollrissgeometrie angeordnet sein. Das Schaumteil reißt dadurch an der Sollrissstelle entlang der ersten Verstärkungsschicht (des abgewinkelten Vlieses) oder entlang der zweiten Verstärkungsschicht oder entlang beider Verstärkungsschichten.

Wenigstens eine der Verstärkungsschichten kann durch Beschichtung oder Laminierung mit einer Anti-Haft-Wirkung auf der dem Airbag zugewandten Seite ausgerüstet sein.

### Figuren und Ausführungsformen der Erfindung

Im Folgenden ist die Erfindung anhand eines in den Figuren dargestellten vorteilhaften Ausführungsbeispiels sowie drei Abwandlungen dieses Ausführungsbeispiels näher erläutert. Die Erfindung ist jedoch nicht auf dieses Ausführungsbeispiel und dessen Abwandlungen beschränkt. Es zeigen:
- Fig. 1:: eine schematische Seitenansicht eines erfindungsgemäßen Fahrzeugsitzes,
- Fig. 2:: einen Schnitt durch eine Rückenlehne des erfindungsgemäßen Fahrzeugsitzes gemäß des Ausführungsbeispiels, entlang der Linie I-I in Fig. 1,
- Fig. 3:: einen Schnitt durch eine Rückenlehne eines erfindungsgemäßen Fahrzeugsitzes gemäß einer ersten Abwandlung des Ausführungsbeispiels, entlang der Linie I-I in Fig. 1,
- Fig. 4:: einen Schnitt durch eine Rückenlehne eines erfindungsgemäßen Fahrzeugsitzes gemäß einer zweiten Abwandlung des Ausführungsbeispiels, entlang der Linie I-I in Fig. 1, und
- Fig. 5:: einen Schnitt durch eine Rückenlehne eines erfindungsgemäßen Fahrzeugsitzes gemäß einer dritten Abwandlung des Ausführungsbeispiels, entlang der Linie I-I in Fig. 1.

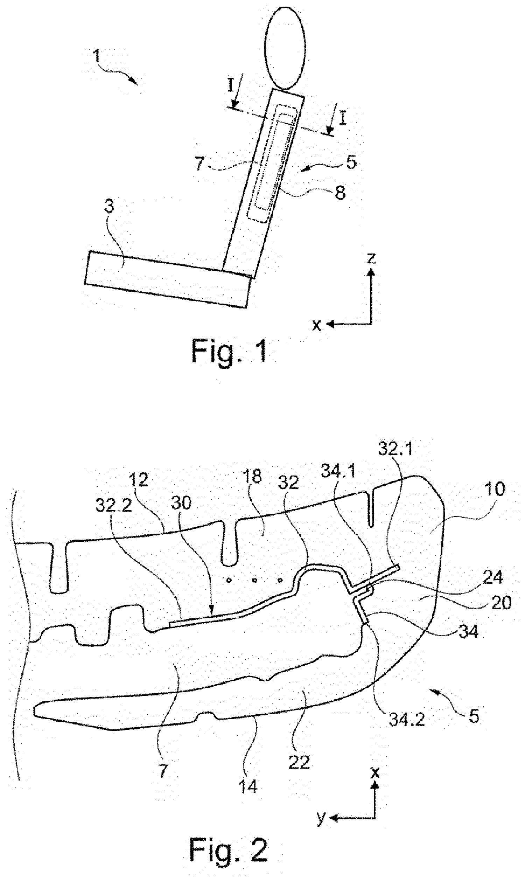

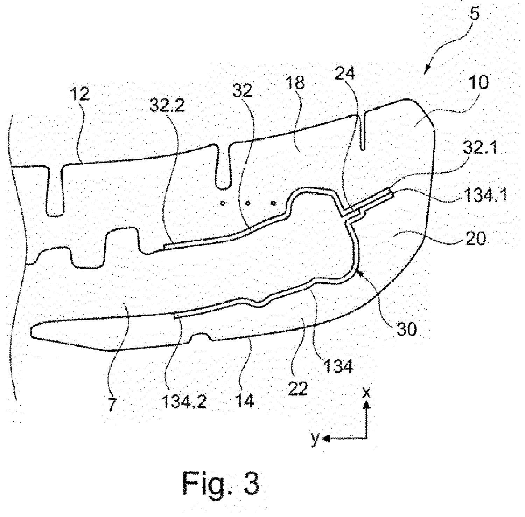

Figur 1 zeigt schematisch einen Fahrzeugsitz 1 für ein Fahrzeug, insbesondere für ein Kraftfahrzeug. Die Darstellung des Fahrzeugsitzes 1 in Fig. 1 ist sowohl für ein Ausführungsbeispiel, dargestellt in Figur 2, als auch für drei Abwandlungen des Ausführungsbeispiels, dargestellt in den Figuren 3 bis 5, zutreffend.

Der Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit einer aufrechtstehenden Rückenlehne 5 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Der Fahrzeugsitz 1 weist ein Sitzteil 3 und die Rückenlehne 5 auf. In der Rückenlehne 5 ist in einem Hohlraum 7 eine Airbagvorrichtung 8 angeordnet. Die Airbagvorrichtung 8 umfasst einen Gassack, der sich im Falle eines Unfalls seitlich (überwiegend parallel zur Querrichtung y) in Richtung eines benachbarten Fahrzeugsitzes oder in Richtung einer Fahrzeugstruktur zum Schutz eines in dem Fahrzeugsitz 1 sitzenden Passagiers entfalten kann.

Figur 2 zeigt einen Schnitt durch eine Rückenlehne 5 eines erfindungsgemäßen Fahrzeugsitzes 1 gemäß eines Ausführungsbeispiels.

Die Rückenlehne 5 weist eine in Fig. 2 nicht dargestellte tragende Lehnenstruktur, ein Schaumteil 10 und einen in Fig. 2 nicht dargestellten Sitzbezug auf. Das Schaumteil 10 weist eine dem Insassen des Fahrzeugsitzes 1 zugewandte Vorderseite 12 und eine dem Insassen abgewandte Rückseite 14 auf. Der Hohlraum 7 nimmt die in den Figuren nicht dargestellte Lehnenstruktur sowie die Airbagvorrichtung 8 in sich auf. Der Hohlraum 7 ist in dem Schaumteil 10 vorgesehen. In einem äußeren Bereich des Hohlraums 7 hat das Schaumteil 10 einen U-förmigen Querschnitt mit einem ersten Flansch 18, einem Steg 20 und einem zweiten Flansch 22. Der erste Flansch 18 ist ein dem Insassen zugewandter Bereich des Schaumteils 10 und verläuft überwiegend parallel zur Querrichtung y. Im Bereich einer Außenseite des Fahrzeugsitzes 1 geht der erste Flansch 18 in den Steg 20 über. Der Steg 20 verläuft überwiegend parallel zur Längsrichtung x. In einem von dem ersten Flansch 18 abgewandten Endbereich des Stegs 20 geht der Steg 20 in den zweiten Flansch 22 über. Der zweite Flansch 22 ist ein dem Insassen abgewandter Bereich des Schaumteils 10 und verläuft überwiegend parallel zur Querrichtung y. Der zweite Flansch 22 ist schwertförmig und in Richtung einer Sitzmitte des Fahrzeugsitzes 1 orientiert. In Richtung der Sitzmitte ist der Hohlraum 7 geöffnet.

In dem den Hohlraum 7 begrenzenden Steg 20 des Schaumteils 10 ist eine Sollrissstelle 24 ausgebildet. Die Sollrissstelle 24 ist vorliegend als eine Kerbe in dem Schaumteil 10 ausgebildet, die sich vom Hohlraum 7 in Richtung der Außenseite des Fahrzeugsitzes 1, vorliegend überwiegend in Querrichtung y, erstreckt. Die Sollrissstelle 24 durchläuft den Steg 20 nur teilweise. Die Sollrissstelle 24 erstreckt sich in Vertikalrichtung z vorzugsweise über wenigstens die gesamte Höhe des Gassackes, insbesondere über die gesamte Höhe des Hohlraums 7. Im Falle eines sich während eines Unfalls entfaltenden Gassackes reißt der Steg 20 des Schaumteils 10 in der durch die Sollrissstelle 24 vorgegebenen Richtung vollständig derart durch, dass der Gassack (ggf. nach Durchtrennen einer Reißnaht in dem Sitzbezug) aus dem Fahrzeugsitz 1 austreten und eine den Insassen schützende Position einnehmen kann.

Das Schaumteil10 ist im Bereich der Airbagvorrichtung 8 zumindest teilweise durch eine weitgehend flächige Verstärkungsschichtanordnung 30 verstärkt, so dass das Schaumteil 10 im Falle eines sich entfaltenden Gassackes nur ausgehend von der Sollrissstelle 24 und nur in einer vorbestimmten Richtung reißen kann.

Die Verstärkungsschichtanordnung 30 umfasst vorliegend eine erste Verstärkungsschicht 32 und eine zweite Verstärkungsschicht 34, die vorliegend jeweils als ein separates, dreidimensional geformtes Vlies ausgebildet sind.

In Querrichtung y betrachtet ist ein äußerer Endbereich 32.1 der ersten Verstärkungsschicht 32 in den Steg 20 des Schaumteils 10 eingeschäumt. Der äußere Endbereich 32.1 verläuft parallel zur Sollrissstelle 24, dringt jedoch tiefer in Richtung der Sitzaußenseite in den Steg 20 ein, als die Sollrissstelle 24. Der übrige Bereich der ersten Verstärkungsschicht 32 bildet eine Trennschicht zwischen dem ersten Flansch 18 und dem Hohlraum 7 und verläuft ausgehend von dem äußeren Endbereich 32.1 in Richtung der Sitzmitte und endet in einem inneren Endbereich 32.2.

In Querrichtung y betrachtet ist ein äußerer Endbereich 34.1 der zweiten Verstärkungsschicht 34 in den Steg 20 des Schaumteils 10 eingeschäumt. Ein äußerer Endbereich 34.1 verläuft entlang der Sollrissstelle 24 und endet stumpf auf der ersten Verstärkungsschicht 32. Der übrige Bereich der zweiten Verstärkungsschicht 34 bildet eine Trennschicht zwischen dem Steg 20 und dem Hohlraum 7 und verläuft ausgehend von dem äußeren Endbereich 34.1 überwiegend parallel zur Längsrichtung x und endet in einem inneren Endbereich 34.2.

Eine in Figur 3 dargestellte erste Abwandlung des Ausführungsbeispiels entspricht bis auf nachfolgend beschriebene Unterschiede dem Ausführungsbeispiel, weshalb gleiche oder gleichwirkende Bauteile die gleichen Bezugszeichen tragen. Gegenüber dem in Fig. 2 dargestellten Ausführungsbeispiel ist lediglich eine zweite Verstärkungsschicht 134 abweichend ausgebildet. Die zweite Verstärkungsschicht 134 ist gegenüber der zweiten Verstärkungsschicht 34 des in Fig. 2 dargestellten Ausführungsbeispiels in Querrichtung y betrachtet größer ausgebildet.

In Querrichtung y betrachtet ist ein äußerer Endbereich 134.1 der zweiten Verstärkungsschicht 134 in den Steg 20 des Schaumteils 10 eingeschäumt. Der äußere Endbereich 134.1 verläuft parallel zur Sollrissstelle 24, dringt jedoch tiefer in Richtung der Sitzaußenseite in den Steg 20 ein, als die Sollrissstelle 24. Der äußere Endbereich 134.1 dringt annähern so tief in den Steg 20 ein wie ein äußerer Endbereich 32.1 einer ersten Verstärkungsschicht 32. Der übrige Bereich der zweiten Verstärkungsschicht 134 bildet eine Trennschicht zwischen dem zweiten Flansch 22 und dem Hohlraum 7 und verläuft ausgehend von dem äußeren Endbereich 134.1 in Richtung der Sitzmitte und endet in einem inneren Endbereich 134.2.

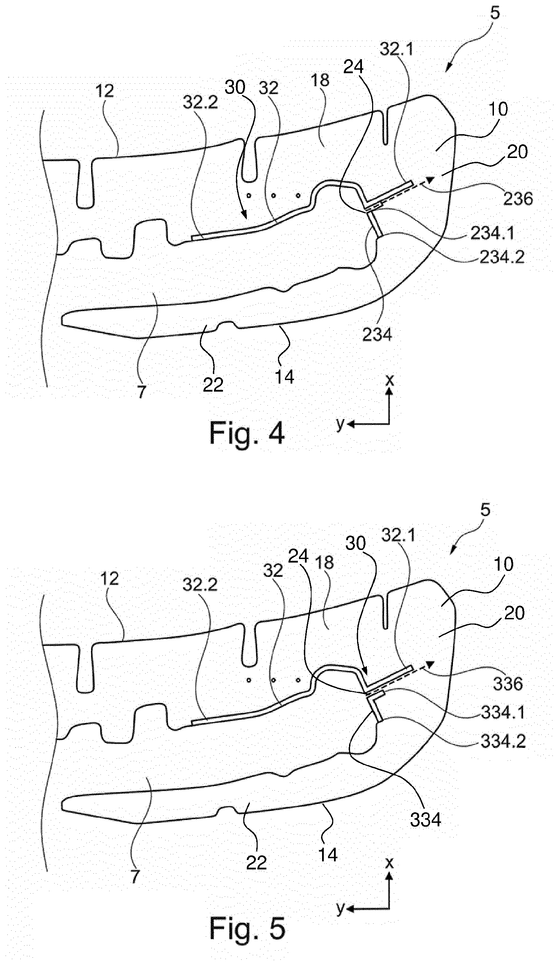

Eine in Figur 4 dargestellte zweite Abwandlung des Ausführungsbeispiels entspricht bis auf nachfolgend beschriebene Unterschiede dem in Figur 2 dargestellten Ausführungsbeispiel, weshalb gleiche oder gleichwirkende Bauteile die gleichen Bezugszeichen tragen. Gegenüber dem in Fig. 2 dargestellten Ausführungsbeispiel ist lediglich eine zweite Verstärkungsschicht 234 abweichend ausgebildet. Die zweite Verstärkungsschicht 234 ist gegenüber der zweiten Verstärkungsschicht 34 des in Figur 2 dargestellten Ausführungsbeispiels in Querrichtung y betrachtet kleiner ausgebildet. In Figur 4 ist zudem ein Rissverlauf 236 dargestellt, der sich im Falle eines Unfalls durch den sich entfaltenden Gassack ausgehend von einer Sollrissstelle 24 ergibt.

In Längsrichtung x betrachtet trifft ein äußerer Endbereich 234.1 der zweiten Verstärkungsschicht 234 annähernd senkrecht, insbesondere senkrecht, auf die Sollrissstelle 24. Ausgehend von dem äußerer Endbereich 234.1 verläuft die zweite Verstärkungsschicht 234 annähernd linear und endet in einem inneren Endbereich 234.2. Der äußerer Endbereich 234.1 ist vorzugsweise geringfügig beabstandet zur ersten Verstärkungsschicht 32.

Eine in Figur 5 dargestellte dritte Abwandlung des Ausführungsbeispiels entspricht bis auf nachfolgend beschriebene Unterschiede dem in Figur 2 dargestellten Ausführungsbeispiel, weshalb gleiche oder gleichwirkende Bauteile die gleichen Bezugszeichen tragen. Gegenüber dem in Figur 2 dargestellten Ausführungsbeispiel ist lediglich eine zweite Verstärkungsschicht 334 abweichend ausgebildet. In Figur 5 ist zudem schematisch ein Rissverlauf 336 dargestellt, der sich im Falle eines Unfalls durch den sich entfaltenden Gassack ausgehend von einer Sollrissstelle 24 ergibt.

Die zweite Verstärkungsschicht 334 ist gegenüber der zweiten Verstärkungsschicht 34 des in Figur 2 dargestellten Ausführungsbeispiels dahingehend abweichend ausgebildet, dass ein äußerer Endbereich 334.1 der zweiten Verstärkungsschicht 334 ausschließlich parallel zu einer Sollrissstelle 24 verläuft, ohne die erste Verstärkungsschicht 32 zu kontaktieren. Ein Abstand zwischen dem äußerer Endbereich 334.1 und der ersten Verstärkungsschicht 32 entspricht annähernd der Breite der Sollrissstelle 24 in Längsrichtung x.

Obwohl die Erfindung in den Figuren und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus.

### Bezugszeichenliste

- 1: Fahrzeugsitz
- 3: Sitzteil
- 5: Rückenlehne
- 7: Hohlraum
- 8: Airbagvorrichtung
- 10: Schaumteil
- 12: Vorderseite
- 14: Rückseite
- 18: erster Flansch
- 20: Steg
- 22: zweiter Flansch
- 24: Sollrissstelle
- 30: Verstärkungsschichtanordnung
- 32: erste Verstärkungsschicht
- 32.1: äußerer Endbereich
- 32.2: innerer Endbereich
- 34: zweite Verstärkungsschicht
- 34.1: äußerer Endbereich
- 34.2: innerer Endbereich
- 134: zweite Verstärkungsschicht
- 134.1: äußerer Endbereich
- 134.2: innerer Endbereich
- 234: zweite Verstärkungsschicht
- 234.1: äußerer Endbereich
- 234.2: innerer Endbereich
- 236: Rissverlauf
- 334: zweite Verstärkungsschicht
- 334.1: äußerer Endbereich
- 334.2: innerer Endbereich
- 336: Rissverlauf
- x: Längsrichtung
- y: Querrichtung
- z: Vertikalrichtung

## Patentansprüche

1. Fahrzeugsitz (1) mit einem Sitzteil (3) und einer Rückenlehne (5), die Rückenlehne (5) aufweisend ein Schaumteil (10) mit einem Hohlraum (7) zur wenigstens teilweisen Aufnahme einer Airbagvorrichtung (8), wobei das Schaumteil (10) im Bereich des Hohlraums (7) wenigstens teilweise mit einer Verstärkungsschichtanordnung (30) ausgekleidet ist, wobei im Falle eines sich entfaltenden Gassackes der Airbagvorrichtung (8), die Verstärkungsschichtanordnung (30) den sich entfaltenden Gassack zu einer Sollrissstelle (24) des Schaumteils (10) führt, und die Verstärkungsschichtanordnung (30) eine erste Verstärkungsschicht (32) und eine zweite Verstärkungsschicht (34, 134, 234, 334) aufweist,
**dadurch gekennzeichnet, dass**
das Schaumteil (10) einen ersten Flansch (18), einen zweiten Flansch (22) und einen den ersten Flansch (18) mit dem zweiten Flansch (22) verbindenden Steg (20) aufweist, die den Hohlraum (7) begrenzen, und ein äußerer Endbereich (32.1) der ersten Verstärkungsschicht (32) und/oder ein äußerer Endbereich (34.1, 134.1, 234.1, 334.1) der zweiten Verstärkungsschicht (34, 134, 234, 334) in den Steg (20) eingeschäumt sind/ist.

2. Fahrzeugsitz (1) nach Anspruch 1, **dadurch gekennzeichnet, dass** die Airbagvorrichtung (8) eine Far-Side-Airbagvorrichtung ist.

3. Fahrzeugsitz (1) nach einem der Ansprüche 1 oder 2,
**dadurch gekennzeichnet,**
**dass** der äußere Endbereich (32.1) der ersten Verstärkungsschicht (32) und der äußere Endbereich (334.1) der zweiten Verstärkungsschicht (334) die Sollrissstelle (24) zwischen sich aufnehmen.

4. Fahrzeugsitz (1) nach Anspruch 3,
**dadurch gekennzeichnet, dass** die Sollrissstelle (24) als eine Kerbe in dem Schaumteil (10) ausgebildet ist.

5. Fahrzeugsitz (1) nach einem der Ansprüche 1 bis 4,
**dadurch gekennzeichnet,**
**dass** der Steg (20) überwiegend parallel zu einer durch eine Längsrichtung (x) und eine Vertikalrichtung (z) erzeugten Ebene verläuft.

6. Fahrzeugsitz (1) nach einem der Ansprüche 1 bis 5,
**dadurch gekennzeichnet,**
**dass** im Bereich der Sollrissstelle (24) des Schaumteils (10) der äußere Endbereich (34.1) der zweiten Verstärkungsschicht (34) annähernd senkrecht zum äußeren Endbereich (32.1) der ersten Verstärkungsschicht (32) ausgerichtet ist.

7. Fahrzeugsitz (1) nach einem der Ansprüche 1 bis 5,
**dadurch gekennzeichnet,**
**dass** im Bereich der Sollrissstelle (24) des Schaumteils (10) der äußere Endbereich (134.1, 234.1, 334.1) der zweiten Verstärkungsschicht (134, 234, 334) annähernd parallel zum äußeren Endbereich (32.1) der ersten Verstärkungsschicht (32) verläuft.

8. Fahrzeugsitz (1) nach einem der Ansprüche 1 bis 7,
**dadurch gekennzeichnet,**
**dass** wenigstens eine Verstärkungsschicht (32, 34, 134, 234, 334) der Verstärkungsschichtanordnung (30) aus einem Gewebe gefertigt ist.

9. Fahrzeugsitz (1) nach einem der Ansprüche 1 bis 8,
**dadurch gekennzeichnet,**
**dass** wenigstens eine Verstärkungsschicht (32, 34, 134, 234, 334) der Verstärkungsschichtanordnung (30) aus einem Kunststoff gefertigt ist.

## Claims

1. Vehicle seat (1) having a seat part (3) and having a backrest (5), the backrest (5) having a foam part (10) with a cavity (7) for at least partially receiving an airbag device (8), wherein, in the region of the cavity (7), the foam part (10) is lined at least partially with a reinforcement-layer arrangement (30), wherein, in the event of a deploying airbag of the airbag device (8), the reinforcement-layer arrangement (30) guides the deploying airbag to a predetermined tearing point (24) of the foam part (10), and the reinforcement-layer arrangement (30) has a first reinforcement layer (32) and a second reinforcement layer (34, 134, 234, 334),
**characterized in that**
the foam part (10) has a first flange (18), a second flange (22) and a web (20) connecting the first flange (18) to the second flange (22), which delimit the cavity (7), and an outer end region (32.1) of the first reinforcement layer (32) and/or an outer end region (34.1, 134.1, 234.1, 334.1) of the second reinforcement layer (34, 134, 234, 334) are/is incorporated into the web (20) by foaming.

2. Vehicle seat (1) according to Claim 1, **characterized in that** the airbag device (8) is a far-side airbag device.

3. Vehicle seat (1) according to either of Claims 1 and 2, **characterized in that** the outer end region (32.1) of the first reinforcement layer (32) and the outer end region (334.1) of the second reinforcement layer (334) receive therebetween the predetermined tearing point (24).

4. Vehicle seat (1) according to Claim 3, **characterized in that** the predetermined tearing point (24) is in the form of a notch in the foam part (10).

5. Vehicle seat (1) according to one of Claims 1 to 4, **characterized in that** the web (20) extends predominantly parallel to a plane formed by a longitudinal direction (x) and a vertical direction (z) .

6. Vehicle seat (1) according to one of Claims 1 to 5, **characterized in that**, in the region of the predetermined tearing point (24) of the foam part (10), the outer end region (34.1) of the second reinforcement layer (34) is oriented approximately perpendicularly to the outer end region (32.1) of the first reinforcement layer (32).

7. Vehicle seat (1) according to one of Claims 1 to 5, **characterized in that**, in the region of the predetermined tearing point (24) of the foam part (10), the outer end region (134.1, 234.1, 334.1) of the second reinforcement layer (134, 234, 334) extends approximately parallel to the outer end region (32.1) of the first reinforcement layer (32).

8. Vehicle seat (1) according to one of Claims 1 to 7, **characterized in that** at least one reinforcement layer (32, 34, 134, 234, 334) of the reinforcement-layer arrangement (30) is produced from a fabric.

9. Vehicle seat (1) according to one of Claims 1 to 8, **characterized in that** at least one reinforcement layer (32, 34, 134, 234, 334) of the reinforcement-layer arrangement (30) is produced from a plastic.

## Revendications

1. Siège de véhicule (1) avec une partie d'assise (3) et un dossier (5), le dossier (5) présentant une partie en mousse (10) avec une cavité (7) pour recevoir au moins partiellement un dispositif d'airbag (8), la partie en mousse (10) étant revêtue au moins partiellement d'un agencement de couches de renforcement (30) dans la zone de la cavité (7), dans lequel, dans le cas d'un sac de gaz qui se déploie du dispositif d'airbag (8), l'agencement de couches de renforcement (30) guide le sac de gaz qui se déploie vers un point destiné à la rupture (24) de la partie en mousse (10), et l'agencement de couches de renforcement (30) présente une première couche de renforcement (32) et une deuxième couche de renforcement (34, 134, 234, 334),
**caractérisé en ce que**
la partie en mousse (10) présente une première bride (18), une deuxième bride (22) et une traverse (20) reliant la première bride (18) à la deuxième bride (22), qui délimitent la cavité (7), et une zone d'extrémité extérieure (32.1) de la première couche de renforcement (32) et/ou une zone d'extrémité extérieure (34.1, 134.1, 234.1, 334.1) de la deuxième couche de renforcement (34, 134, 234, 334) est/sont moussées dans la traverse (20).

2. Siège de véhicule (1) selon la revendication 1, **caractérisé en ce que** le dispositif d'airbag (8) est un dispositif d'airbag de type Far-Side.

3. Siège de véhicule (1) selon l'une quelconque des revendications 1 ou 2, **caractérisé en ce que** la zone d'extrémité extérieure (32.1) de la première couche de renforcement (32) et la zone d'extrémité extérieure (334.1) de la deuxième couche de renforcement (334) reçoivent entre elles le point destiné à la rupture (24).

4. Siège de véhicule (1) selon la revendication 3, **caractérisé en ce que** le point destiné à la rupture (24) est réalisé sous la forme d'une encoche dans la partie en mousse (10).

5. Siège de véhicule (1) selon l'une quelconque des revendications 1 à 4, **caractérisé en ce que** la traverse (20) s'étend principalement parallèlement à un plan généré par une direction longitudinale (x) et une direction verticale (z).

6. Siège de véhicule (1) selon l'une quelconque des revendications 1 à 5, **caractérisé en ce que**, dans la zone du point destiné à la rupture (24) de la partie en mousse (10), la zone d'extrémité extérieure (34.1) de la deuxième couche de renforcement (34) est orientée approximativement perpendiculairement à la zone d'extrémité extérieure (32.1) de la première couche de renforcement (32).

7. Siège de véhicule (1) selon l'une quelconque des revendications 1 à 5, **caractérisé en ce que**, dans la zone du point destiné à la rupture (24) de la partie en mousse (10), la zone d'extrémité extérieure (134.1, 234.1, 334.1) de la deuxième couche de renforcement (134, 234, 334) s'étend approximativement parallèlement à la zone d'extrémité extérieure (32.1) de la première couche de renforcement (32).

8. Siège de véhicule (1) selon l'une quelconque des revendications 1 à 7, **caractérisé en ce qu'**au moins une couche de renforcement (32, 34, 134, 234, 334) de l'agencement de couches de renforcement (30) est fabriquée à partir d'un tissu.

9. Siège de véhicule (1) selon l'une quelconque des revendications 1 à 8, **caractérisé en ce qu'**au moins une couche de renforcement (32, 34, 134, 234, 334) de l'agencement de couches de renforcement (30) est fabriquée à partir d'une matière plastique.
